# EUROPÄISCHE PATENTSCHRIFT

(11) **EP 3 022 528 B1**
(45) Veröffentlichungstag und Bekanntmachung des Hinweises auf die Patenterteilung: **21.11.2018**
(21) Anmeldenummer: 14731913.1
(22) Anmeldetag: 21.06.2014
(51) Int. Cl.: G01C 21/36

(54) **VERFAHREN ZUM BETRIEB EINER NAVIGATIONSEINRICHTUNG, NAVIGATIONSEINRICHTUNG UND KRAFTFAHRZEUG**
METHOD FOR OPERATING A NAVIGATION SYSTEM, NAVIGATION SYSTEM AND MOTOR VEHICLE
PROCÉDÉ DE FONCTIONNEMENT D'UN SYSTÈME DE NAVIGATION, SYSTÈME DE NAVIGATION ET VÉHICULE AUTOMOBILE

(30) Priorität: 15.07.2013 DE 102013011827
(43) Veröffentlichungstag der Anmeldung: 25.05.2016
(73) Patentinhaber: Audi AG, 85045 Ingolstadt (DE)
(72) Erfinder: HAINZLMAIER, Andre, 85049 Ingolstadt (DE); HEINEMANN, Patrick, 85092 Kösching (DE); PROFENDINER, Daniel, 85049 Ingolstadt (DE); ENNING, Martin, 85049 Ingolstadt (DE); PHAM, Viet Hoang, 85080 Gaimerheim (DE)
(74) Vertreter: Bauer, Dominik Michael
(86) Internationale Anmeldenummer: PCT/EP2014/001691
(87) Internationale Veröffentlichungsnummer: WO 2015/007362

(56) Entgegenhaltungen:
- EP-A1- 1 378 724
- EP-A2- 2 458 337
- US-A1- 2002 120 397
- US-A1- 2013 170 706

## Beschreibung

Die Erfindung betrifft ein Verfahren zum Betrieb einer Navigationseinrichtung, insbesondere in einem Kraftfahrzeug.

Navigationsgeräte bieten Benutzern die Möglichkeit, einen Zielort leicht und unkompliziert aufzufinden. Daher werden Navigationsgeräte insbesondere in Kraftfahrzeugen und insbesondere von Personen, die häufig unbekannte Strecken fahren, gerne genutzt. In einem Navigationsgerät wird üblicherweise die Position eines Benutzers ermittelt, typischerweise über das Global Positioning System GPS und es wird im Gerät gespeichertes Kartenmaterial sowie eine auf dem Gerät installierte Routenplanersoftware genutzt um einen Benutzer ans Ziel zu führen.

Eine solche Zielführung erfolgt indem die Navigationseinrichtung einem Benutzer Hinweise zur Navigation gibt. In einem Kraftfahrzeug können dies beispielsweise Anweisungen zu durchzuführenden Fahrmanövern sein. Neben dem Manöver selbst, also beispielsweise rechts abbiegen, muss dem Benutzer mitgeteilt werden, wann dieses Manöver durchzuführen ist. Gerade in komplexen Verkehrssituationen soll dies frühzeitig erfolgen, so dass der Benutzer ein durchzuführendes Fahrmanöver ausreichend vorbereiten kann. Um solche frühzeitigen Hinweise zu geben ist es üblich, eine Navigationsanweisung zusätzlich mit einer Entfernungsangabe zu versehen oder Straßennamen als Orientierungspunkte zu nutzen. Damit können Navigationsinformationen wie beispielsweise "Biegen Sie in 100 m links ab", "Biegen Sie die nächste Straße rechts ab", oder "Fahren Sie auf die Richard-Wagner-Straße" gegeben werden.

Eine Gabe von Navigationshinweisen mit Nutzung von Entfernungsangaben oder Straßennamen ist besonders einfach möglich, da bei der Nutzung einer Straßenkarte im Navigationssystem Informationen über Straßennamen und Entfernungen ohnehin vorhanden sind. Nachteilig ist jedoch, dass Entfernungen von Benutzern von Navigationssystemen häufig nicht richtig eingeschätzt werden und Straßennamen nur in seltenen Fällen klar und deutlich im Straßenbild zu erkennen sind. Dabei ist es leicht möglich, dass ein Benutzer eines Navigationsgeräts den Navigationshinweisen nicht folgen kann. Auch wird der allgemeine Benutzungskomfort dadurch gesenkt, dass ein Benutzer nach Straßenschildern oder Ähnlichem Ausschau halten muss. Auch kann es notwendig sein, die Fahrt deutlich zu verlangsamen, um zu erkennen, in welche Straße eingebogen werden soll.

Die Ausgabe von Navigationshinweisen ist beispielsweise aus dem Dokument EP1378724 A1 bekannt.

Der Erfindung liegt damit die Aufgabe zugrunde, ein Verfahren zum Betrieb einer Navigationseinrichtung anzugeben, das eine demgegenüber verbesserte Ausgabe von Navigationshinweisen ermöglicht.

Die Aufgabe wird erfindungsgemäß durch ein Verfahren gemäß Anspruch 1 gelöst.

Der Erfindung liegt die Idee zugrunde, dass es für eine Vielzahl von Nutzern von Navigationseinrichtungen weit einfacher ist, sich an Objekten des täglichen Lebens wie beispielsweise Häusern, parkenden Fahrzeugen, Bäumen oder Ähnlichem, zu orientieren, als an Straßenamen. So werden im täglichen Leben häufig Wegbeschreibungen gegeben, wie beispielsweise "bei der Kirche rechts abbiegen" oder Ähnliches. Insbesondere bei der Nutzung einer Navigationseinrichtung in einem Kraftfahrzeug hat die objektbasierte Navigation den Vorteil, dass Markierungen für Wegpunkte genutzt werden können, die dem Benutzer der Navigationseinrichtung sofort ins Auge fallen. So ist es weit einfacher, ein bestimmtes Gebäude, ein Kraftfahrzeug einer bestimmten Farbe oder Ähnliches zu erkennen, als eine Straße mit einem bestimmten Namen, insbesondere da Straßenschilder häufig von anderen Objekten verdeckt werden oder zumindest aus der Entfernung schlecht zu erkennen sind.

Die Schritte des Verfahrens können alle durch eine Navigationseinrichtung durchgeführt werden. Eine solche Navigationseinrichtung kann auch von Fußgängern, Fahrradfahrern oder Ähnlichem genutzt werden. So beherrschen beispielsweise eine Vielzahl moderner Smartphones oder anderer mobiler Elektronikgeräte grundlegende Funktionen einer Navigationseinrichtung. Auch auf solchen Geräten kann das erfindungsgemäßen Verfahren zum Betrieb einer Navigationseinrichtung genutzt werden. Besonders vorteilhaft ist die Nutzung des erfindungsgemäßen Verfahrens jedoch in Kraftfahrzeugen, da diese sich typischerweise mit einer höheren Geschwindigkeit bewegen als Fußgänger, Radfahrer oder Ähnliches. Eine Navigation anhand von Referenzobjekten bietet zudem einen deutlich erhöhten Fahrkomfort. Zudem weisen Kraftfahrzeuge häufig eine Vielzahl zusätzlicher Sensoren, insbesondere bildgebender Sensoren wie Kameras oder Ähnliches, auf, mit denen eine besonders gute Erkennung von markanten Objekten und damit eine besonders gute Navigation mit dem erfindungsgemäßen Verfahren möglich ist.

Insbesondere in Kraftfahrzeugen ist es möglich, dass einige Schritte des Verfahrens durch andere im Kraftfahrzeug vorhandene Systeme als die Navigationseinrichtung durchgeführt werden. So ist es beispielsweise möglich, dass einer Kamera bereits Bildverarbeitungsmittel zugeordnet sind, die eine Objekterkennung vollständig oder teilweise übernehmen können. Es ist auch möglich, dass bestimmte Objekte bereits durch Fahrerassistenzsysteme erkannt wurden. Auch Kommunikationseinrichtungen, Positionsbestimmungssysteme, Sensoren, Lautsprecher oder Ähnliches, die auch für weitere Aufgaben im Kraftfahrzeug genutzt werden, können bei der Durchführung des Verfahrens genutzt werden.

Bei der Durchführung des erfindungsgemäßen Verfahrens soll dem Fahrer eine akustische Navigationsinformation zur Verfügung stellt werden, mit der er typischerweise darauf hingewiesen wird, dass an einem vorausliegenden Wegpunkt einer geplanten Route ein bestimmtes Fahrmanöver durchgeführt werden soll. Verfahren zur Planung einer Route in Navigationseinrichtungen sind im Stand der Technik wohl bekannt und sollen hier nicht weiter beschrieben werden. Eine solche geplante Route umfasst typischerweise eine Vielzahl von Punkte, an denen bestimmte Fahrmanöver vom Fahrer durchgeführt werden sollen, wie beispielsweise ein Wechsel der Fahrspur, ein Abbiegen in Straßen oder Ähnliches. Wie eingangs erläutert, werden solche Informationen typischerweise bereits eine gewisse Zeit vor Erreichen des Punktes, an dem das Fahrmanöver ausgeführt werden soll, akustisch ausgegeben.

Mit dem erfindungsgemäßen Verfahren ist es möglich, statt einem Straßennamen oder einer Entfernung ein konkretes Objekt anzugeben, das die Stelle, an der das Fahrmanöver durchgeführt werden soll, markiert. Hierzu wird zunächst ein vorausliegender Wegpunkt gewählt, an dem eine Navigationsinformation ausgegeben werden soll. Typischerweise ist dies der nächste Wegpunkt, an dem ein Fahrmanöver durch den Fahrer notwendig ist. In einigen Fällen, beispielsweise wenn auf der geplanten Route mehrere Fahrmanöver innerhalb eines kurzen Zeitraums erfolgen sollen, ist es möglich, das erfindungsgemäße Verfahren auch für einen anderen als einen direkt vorausliegenden Wegpunkt durchzuführen.

Im folgenden Schritt des Verfahrens werden die Umgebung des Wegpunkts betreffende Umgebungsdaten gesammelt. Hierbei ist es möglich, dass das Kraftfahrzeug eine einzige Datenquelle nutzt, es können aber auch mehrere Datenquellen genutzt und insbesondere kombiniert werden. Umgebungsdaten können insbesondere durch lokale Datenbanken, Datenbanken, auf die über eine drahtlose Kommunikationsschnittstelle zugegriffen wird, oder Sensordaten bestimmt werden. Beispielsweise kann eine Frontkamera des Kraftfahrzeugs ein Abbild der Fahrzeugumgebung aufnehmen. Durch Nutzung bekannter Verfahren der Bildverarbeitung können bereits aus einem einzelnen Kamerabild meist nicht nur die Raumwinkel bestimmt werden, in dem sich ein Objekt befindet, sondern auch der Abstand des Objektes. Damit ist es möglich, Objekte zu identifizieren, die sich in der Nähe eines vorausliegenden Wegpunktes befinden. Alternativ oder ergänzend ist es jedoch auch möglich, Datenbanken mit ortsspezifischen Informationen, wie beispielsweise Listen von Sehenswürdigkeiten, Adressregister, Luftbilddatenbanken oder Ähnliches zu nutzen.

Im Anschluss können aus den Umgebungsdaten einzelne Referenzobjekte ermittelt werden. Solche Referenzobjekte können beispielsweise durch Bilderkennung in Bildern erkannt werden, es ist aber auch möglich, dass das Objekt direkt in den ermittelten Umgebungsdaten beschrieben ist. Insbesondere können beispielsweise Positionen von Gebäude oder Ähnliches in Datenbanken erfasst sein. Typischerweise soll nur die Bezeichnung eines einzelnen Referenzobjekts ausgegeben werden. Deshalb kann beispielsweise nur ein Referenzobjekt ermittelt werden. Es ist jedoch vorteilhaft, mehrere potentielle Referenzobjekte zu ermitteln und aus diesen ein besonders gut geeignetes Referenzobjekt auszuwählen. Um als Referenzobjekt besonders gut geeignet zu sein, sollte ein Referenzobjekt mehrere Anforderungen erfüllen. So sollte ein Referenzobjekt zumindest für die Zeit, die ein Benutzer zum Erreichen des Wegpunktes benötigt, seine Position nicht ändern. Damit sind insbesondere unbewegte Objekte wie Häuser, Werbetafeln oder Ähnliches als Referenzobjekte besonders gut geeignet. Daneben sollte ein Referenzobjekt leicht erkennbar sein. Damit ist es in diesem Schritt vorteilhaft, besonders große oder besonders auffällige Objekte zu wählen. Zudem sollte das Referenzobjekt auch eindeutig identifizierbar sein. Werden beispielsweise viele rote parkende Autos erkannt, so kann ein rotes parkendes Auto als Referenzobjekt verworfen werden, falls andere besser geeignete Referenzobjekte erkannt werden.

Das Referenzobjekt soll im erfindungsgemäßen Verfahren zur Markierung eines Wegpunktes dienen. Um diesen Zweck zu erreichen, muss dem Benutzer jedoch mitgeteilt werden, was dieses Referenzobjekt ist. Die Mitteilung der Navigationsinformation und damit des Referenzobjektes erfolgt im erfindungsgemäßen Verfahren akustisch. Daher ist es notwendig, das Referenzobjekt akustisch wiederzugeben, weshalb dem Referenzobjekt im erfindungsgemäßen Verfahren eine verbale Bezeichnung zugeordnet wird.

Das Finden einer solchen Bezeichnung kann besonders einfach sein, wenn die ursprünglichen Umgebungsdaten, aus denen das Objekt ermittelt wurde, aus einer Datenbank mit ortsspezifischen Informationen stammen. Häufig ist eine Bezeichnung für das Referenzobjekt bereits in dieser Datenbank gespeichert und steht damit im erfindungsgemäßen Verfahren zur Verfügung. Auch bei der Erkennung von Objekten aus Sensordaten, insbesondere aus Kamerabildern, werden typischerweise nur bestimmte Objekte erkannt und identifiziert. Dabei ist es insbesondere möglich, dass die Navigationseinrichtung eine Datenbank nutzt, die verbale Bezeichnungen für solche bekannten Objekte umfasst.

Die verbale Bezeichnung für ein Referenzobjekt kann zunächst in Textform ermittelt werden und anschließend beispielsweise durch ein Text-to-Speech System oder Ähnliches für eine akustische Ausgabe vorbereitet werden, es ist jedoch auch möglich, dass Datenbanken genutzt werden, die direkt gesprochene verbale Bezeichnungen für die Referenzobjekte umfassen.

Neben einem Objekttyp, also beispielsweise der Information, dass es sich bei dem Referenzobjekt um ein Auto, ein Haus, einen Baum oder Ähnliches handelt, können auch weitere Eigenschaften des Objekts mit angegeben werden. Somit kann sich die verbale Bezeichnung insbesondere aus wenigstens einem Adjektiv und wenigstens einem Nomen zusammensetzen. Dabei kann das Adjektiv beispielsweise eine Farbbezeichnung oder eine Größenangabe sein. Es können auch weitere Adjektive, wie beispielsweise "parkend" oder Ähnliches eingefügt werden, so dass verbale Bezeichnungen wie beispielsweise "parkendes rotes Auto", "großes Haus" oder Ähnliches gebildet werden können.
Insbesondere bei Gebäuden, jedoch auch bei Lastwagen, Werbetafeln oder Ähnlichem ist es auch möglich, dass die Bezeichnung einen Firmennamen, eine Geschäftsbezeichnung, die Art des beworbenen Objekts oder Ähnliches umfasst. Dabei ist es auch möglich, nur Teile dieser Bezeichnungen wiederzugeben. So kann nur die Art des Betriebs, beispielsweise "Metzger" oder nur ein Name des Betriebs, beispielsweise der Name des Ladeninhabers oder Ähnliches ausgegeben werden. Die Nutzung von Bezeichnungen für Läden, Restaurants oder Ähnliches ist insbesondere vorteilhaft, da häufig auffällige Schilder an solchen Gebäuden angebracht sind. Die entsprechenden Informationen können beispielsweise direkt aus Bildern der Schilder erkannt werden, es ist aber auch möglich, solche Informationen aus Telefonbüchern, Branchenverzeichnissen oder Ähnlichem zu ermitteln. Auch können Logos erkannt werden und beispielsweise mit Datenbanken abgeglichen werden um zu einer verbalen Bezeichnung zu langen.
Die verbale Bezeichnung eines Referenzobjektes wird anschließend genutzt, um eine Navigationsinformation zu erstellen, die an den Benutzer ausgegeben werden soll. Eine solche Navigationsinformation umfasst neben der Bezeichnung des Referenzobjekts typischerweise noch einen Navigationshinweis, wie beispielsweise in Kraftfahrzeugen eine Fahranweisung, und unter Umständen noch relative Angaben, wie "vor", "hinter", "bei" oder Ähnliches. Damit können im letzten Schritt des Verfahrens Navigationsinformationen ausgegeben werden, die zur klaren und einfachen Orientierung des Nutzers ein Objekt bezeichnen, das eine Stelle markiert, an der beispielsweise ein bestimmtes Fahrmanöver durchgeführt werden soll. Mit dem erfindungsgemäßen Verfahren können also besonders intuitive Navigationsinformationen ausgegeben werden, wie "vorn beim blauen Lieferwagen rechts" oder "dort vorn beim Fast-Food-Restaurant links".

Gemäß der Erfindung kann die Navigationseinrichtung die Umgebungsdaten zumindest teilweise anhand von Sensordaten von, insbesondere am Kraftfahrzeug angeordneten, Sensoren bestimmen. Die Sensordaten können durch die Navigationseinrichtung selbst ausgewertet werden, es ist jedoch auch möglich, dass die Navigationseinrichtung bereits vorverarbeitete Daten nutzt. Beispielsweise kann ein Fahrerassistenzsystem des Kraftfahrzeugs anhand von Sensordaten bereits Informationen über parkende Fahrzeuge umfassen. In diesem Fall sind Objekte bereits identifiziert und es sind auch schon Positionsinformationen für diese Objekte vorhanden. Diese Informationen können dann beispielsweise durch eine Farbinformation, die aus einem Kamerabild gewonnen wurde, ergänzt werden. Sensordaten können jedoch auch genutzt werden, um Daten, die beispielsweise aus einer Datenbank mit ortsspezifischen Informationen stammen, zu präzisieren und/oder um zu erkennen, ob eine Sichtlinie zu bestimmten Referenzobjekten versperrt ist, wodurch es vorteilhaft ist, andere Referenzobjekte zur Bildung der Navigationsinformation zu nutzen.

Insbesondere können die Sensordaten Bilddaten einer eine die Umgebung erfassenden Kamera sein. Bei einer Benutzung einer Navigationseinrichtung im Kraftfahrzeug kann dabei insbesondere eine Frontkamera des Kraftfahrzeugs genutzt werden. Bilddaten können insbesondere genutzt werden, um ein mögliches Sichtfeld eines Benutzers zu bestimmen und damit zu erkennen, welche Referenzobjekte in der Umgebung des Wegpunktes besonders gut oder besonders schlecht zu erkennen sind. Auch können mit Bildinformationen leicht Zusatzinformationen zu Objekten, die mit Hilfe anderer Methoden ermittelt werden, wie die Farbe eines Objekts oder Ähnliches ermittelt werden.

Mit einer Vielzahl von Bildverarbeitungsalgorithmen ist es möglich, bereits aus einem zweidimensionalen Bild eine Entfernung zu einem Objekt abzuschätzen, wodurch alleine durch Bildverarbeitung der Bilddaten einer Kamera Referenzobjekte in der Umgebung des Wegpunktes bestimmt werden können. Im Rahmen der Bildverarbeitung können auch bestimmte Werbemotive oder Logos erkannt werden und damit beispielsweise bekannte Produktbezeichnungen als Teil einer verbalen Bezeichnung für ein Referenzobjekt genutzt werden. Die gewonnenen Bilddaten können auch mit Daten aus Datenbanken kombiniert und durch diese ergänzt oder mit diesen abgeglichen werden.

Im Stand der Technik sind eine Vielzahl von Bilderkennungsalgorithmen bekannt, die eine Erkennung einer Objektart ermöglichen. Rein beispielhaft sei hier die Erkennung von skaleninvarianten Merkmalen genannt. Das Feld der Bilderkennung befindet sich jedoch in einer stetigen Entwicklung. Daher soll hier nicht detailliert auf die entsprechenden Algorithmen eingegangen werden.

Alternativ oder ergänzend ist es möglich, dass die Navigationseinrichtung die Umgebungsdaten zumindest teilweise durch Bestimmung einer Position des Wegpunktes und Auswertung wenigstens einer Datenbank mit ortsspezifischen Informationen bestimmt. Eine solche Datenbank kann im einfachsten Fall eine digitale Karte sein, wie sie ohnehin in den meisten Navigationsgeräten vorhanden ist. Solche digitalen Karten können beispielsweise auch Informationen über Tankstellen, Restaurants, Sehenswürdigkeiten oder Ähnliches umfassen. Bereits mit diesen Informationen kann in einigen Verkehrssituationen ein Referenzobjekt bestimmt werden und damit eine intuitiv verständliche Navigationsinformation ausgegeben werden. Mit Hilfe digitaler Karten sind beispielsweise Navigationshinweise wie "hinter der Tankstelle links" oder Ähnliches möglich. Es ist auch möglich, digitale Karten mit zusätzlichen Details zu nutzen. Insbesondere können auch Datenbanken mit Luftaufnahmen in denen Merkmale erkannt werden können oder Ähnliches genutzt werden. Auch Adressverzeichnisse, insbesondere Branchenbücher oder Ähnliches sind nutzbar.

Dabei ist es möglich, dass die Datenbank lokal vorhanden ist, d. h. beispielsweise in einer Navigationseinrichtung selbst oder in einer außerhalb der Navigationseinrichtung befindlichen Speichereinrichtung, beispielsweise in einem Kraftfahrzeug gespeichert ist. Insbesondere in Kraftfahrzeugen können zusätzlich Datenspeicher wie Laufwerke für optische Medien oder Ähnliches vorgesehen sein. Es ist jedoch auch möglich, dass die Datenbank extern ist und der Zugriff auf die externe Datenbank durch drahtlose Kommunikation erfolgt. Eine solche externe Datenbank kann eine Datenbank sein, die direkt Navigationshilfen zur Verfügung stellt, es können jedoch auch Luftbilder, Adresslisten, Karten, Bilddienste und Ähnliches genutzt werden. Dabei ist es insbesondere möglich, dass die Datenbank eine Internetdatenbank ist.
Die drahtlose Kommunikation kann insbesondere über eine Car-2-X oder eine Car-2-Car Navigation erfolgen. Es können jedoch beispielsweise auch übliche Mobilfunkstandards genutzt werden um beispielsweise mit Internetdatenbanken zu kommunizieren.

Gemäß der Erfindung ist das Referenzobjekt ein für einen Mindestzeitraum nicht bewegtes Objekt. Referenzobjekte sollen im erfindungsgemäßen Verfahren als Fixpunkte dienen, an denen sich ein Benutzer schnell und einfach orientieren kann. Würde sich das Referenzobjekt zwischen dem Zeitpunkt, zu dem die Navigationsinformation ausgegeben wird, und dem Zeitpunkt, zu dem ein Benutzer den Wegpunkt erreicht, bewegen, so könnte dies dazu führen, dass der Benutzer die Navigationsinformation auf den falschen Ort bezieht und damit beispielsweise in eine falsche Straße einbiegt.
Häufig ist es möglich, Referenzobjekte zu erkennen, bei denen mit hoher Sicherheit davon ausgegangen werden kann, dass zumindest für den hier betrachteten Zeitraum keine Bewegung des Referenzobjektes stattfindet. Dies können beispielsweise Häuser, Bäume, Werbetafeln oder Ähnliche fest installierte Objekte sein. Gemäß der Erfindung ist es jedoch auch gewünscht, parkende Fahrzeuge als Referenzobjekte zu nutzen. In diesem Fall können verschiedene Kriterien angewandt werden, um mit hoher Wahrscheinlichkeit voraussagen zu können, ob eine Bewegung eines solchen Objekts erwartet werden kann oder nicht. Beispielsweise kann durch Sensoren festgestellt werden, ob der Motor eines Kraftfahrzeugs läuft oder nicht läuft, an der Position eines Kraftfahrzeugs kann erkannt werden, ob dieses sich in einer Parkbucht oder auf einer Straße befindet oder Ähnliches. Hier ist es auch möglich, aus einer längeren beobachteten Nichtbewegung zu schließen, dass mit hoher Wahrscheinlichkeit keine zukünftige Bewegung stattfindet. Beispielsweise kann bei Objekten, die sich für eine gewisse Mindestzeit, beispielsweise dreißig Sekunden, nicht bewegen, davon ausgegangen werden, dass sie sich mit geringer Wahrscheinlichkeit bewegen. Selbstverständlich können hierbei auch Randbedingungen berücksichtigt werden, beispielsweise ob ein Kraftfahrzeug an einer Ampel steht oder Ähnliches.

Ein Referenzobjekt kann zusätzlich auch ein Gebäude oder eine Pflanze oder eine feststehende Tafel sein. Bei der Tafel kann es sich auch um eine Hinweistafel, insbesondere um ein Verkehrsschild handeln. Auch Werbung, also Plakatwände, Liftfasssäulen oder Ähnliches können erkannt werden. Alternativ oder ergänzend ist auch eine Erkennung von Signaleinrichtungen wie Ampeln, Warnleuchten oder Ähnliches möglich.
Wie eingangs erwähnt, ist es vorteilhaft, bei der Erstellung der Navigationsinformation nur die Bezeichnung eines einzigen Referenzobjektes zu nutzen. Beim erfindungsgemäßen Verfahren ist es aber durchaus möglich, dass eine Vielzahl von Referenzobjekten in der Umgebung des Wegpunktes erkannt werden. Daher ist es vorteilhaft, wenn bei Ermittlung mehrerer Referenzobjekte eine Prioritätsinformation für die Referenzobjekte ermittelt wird und in Abhängigkeit von der Prioritätsinformation ein Referenzobjekt gewählt wird, dessen Bezeichnung ausgegeben wird.
Bei der Prioritätsinformation kann es sich insbesondere um einen einzelnen Zahlenwert handeln, der angibt, wie gut ein bestimmtes Objekt als Referenzobjekt geeignet ist. Für die Eignung eines Referenzobjekts kann eine Vielzahl von Kriterien genutzt werden. Beispielsweise kann anhand von Kameradaten überprüft werden, wie gut bzw. wie früh vor Erreichen des Wegpunktes ein Referenzobjekt für den Fahrer sichtbar ist. Zudem kann überprüft werden, wie eindeutig ein Referenzobjekt identifiziert werden kann. So sollte beispielsweise auf einer Allee, ein Baum nicht als Referenzobjekt genutzt werden, da sich in diesem Fall viele ähnliche Referenzobjekte im Blickfeld des Fahrers befinden und die Navigationsinformation damit unklar wird.

Die Prioritätsinformation kann weiterhin die Bekanntheit eines Bezugspunktes nutzen. So ist typischerweise davon auszugehen, dass ein Benutzer bekannte Sehenswürdigkeiten oder besonders bekannte Logos oder Ähnliches kennt und sich damit leicht an ihnen orientieren kann. Die Prioritätsinformation kann auch berücksichtigen, ob ein Referenzobjekt vollständig unbeweglich ist und sich beispielsweise bereits seit Jahren an einem Ort befindet. Ein solches Referenzobjekt kann vorteilhaft sein, da ein Benutzer des Navigationsgeräts bereits mit der Tatsache, dass sich dieses Referenzobjekt an einer bestimmten Stelle befindet, vertraut ist.

Daneben betrifft die Erfindung eine Navigationseinrichtung zur Führung eines Benutzers entlang einer durch die Navigationseinrichtung bestimmten Route, wobei die Navigationseinrichtung zur Durchführung eines der oben beschriebenen Verfahren ausgebildet ist.

Zudem betrifft die Erfindung ein Kraftfahrzeug, das die obig beschriebene Navigationseinrichtung umfasst.

Weitere Vorteile und Einzelheiten der Erfindung ergeben sich aus den folgenden Ausführungsbeispielen sowie anhand der zugehörigen Zeichnungen. Dabei zeigen:
- Fig. 1: ein Ablaufdiagramm für ein Ausführungsbeispiel des erfindungsgemäßen Verfahrens,
- Fig. 2: eine Verkehrssituation in der das erfindungsgemäße Verfahren genutzt werden kann,
- Fig. 3: die Verkehrssituation aus Fig. 2 mit einem zusätzlichen Lastwagen,
- Fig. 4: ein Ablaufdiagramm zur Bestimmung eines Referenzobjekts als Teil eines Ausführungsbeispiels eines erfindungsgemäßen Verfahrens,
- Fig. 5: eine schematische Darstellung eines Ausführungsbeispiels einer erfindungsgemäßen Navigationseinrichtung, und
- Fig. 6: eine schematische Darstellung eines Ausführungsbeispiels eines erfindungsgemäßen Kraftfahrzeugs.

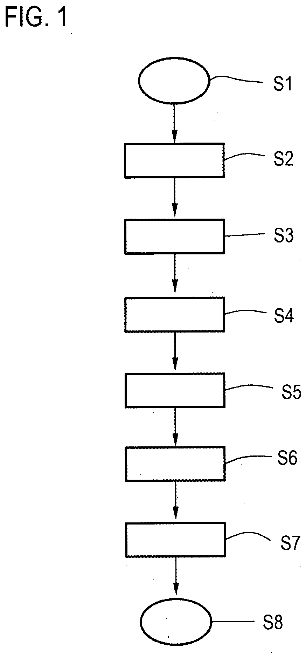

Fig. 1 zeigt ein Ablaufdiagramm eines Verfahrens zum Betrieb einer Navigationseinrichtung. Das Verfahren beginnt in Schritt S1. In Schritt S1 werden eine Vielzahl vorbereitender Schritte durchgeführt, die der Bestimmung einer Route dienen. Eine solche Route kann beispielsweise bestimmt werden, indem ein Benutzer über eine Benutzerschnittstelle der Navigationseinrichtung einen Zielort eingibt und die Navigationseinrichtung aus Ortsdaten einer Ortsbestimmungseinrichtung, beispielsweise eines GPS-Sensors, die EGO-Position des Benutzer erkennt. Mit Hilfe einer digitalen Karte die insbesondere Straßenverläufe umfasst, kann die Navigationseinrichtung dann eine oder mehrere Routen von der EGO-Position des Benutzers zu dem Zielort berechnen. Eine solche Route umfasst typischerweise eine Vielzahl von Wegpunkten, wobei zumindest zu einer Untermenge dieser Wegpunkte eine Navigationsinformation an einen Benutzer ausgegeben werden soll. Ein solcher Wegpunkt kann beispielsweise eine Einmündung oder eine Kreuzung sein, an der ein Kraftfahrzeug, dessen Route durch die Navigationseinrichtung geplant wird, abbiegen soll. Im Weiteren soll davon ausgegangen werden, dass zunächst eine Navigationsinformation für den zeitlich nächstliegenden Wegpunkt ausgegeben werden soll. Das erläuterte Verfahren kann jedoch exakt gleich zur Ausgabe einer Navigationsinformation für einen zeitlich weiter entfernt liegenden Wegpunkt genutzt werden.

In Schritt S2 wird der vorausliegende Wegpunkt bestimmt, zu dem eine Navigationsinformation an einen Benutzer ausgegeben werden soll. Dies ist im hier betrachteten Fall der zeitlich nächstliegende Wegpunkt. Typischerweise erfasst eine Navigationseinrichtung kontinuierlich die Ego-Position eines Benutzers, beispielsweise durch Auswertung von GPS-Informationen. Damit sind für den Wegpunkt üblicherweise die absolute Position des Wegpunktes, die Straßennamen im Bereich des Wegpunktes sowie die relative Position des Wegpunktes zum Benutzer bekannt. Mit diesen Informationen könnte direkt eine Navigationsinformation mit Anweisungen wie "in 100 m rechts abbiegen" oder "in die Richard-Wagner-Straße einbiegen" generiert werden.

In den weiteren Verfahrensschritten werden Zusatzinformationen ermittelt, die es ermöglichen, ergänzend oder alternativ Bezeichnungen für Referenzobjekte akustisch auszugeben, so dass als Navigationsinformation beispielsweise "bei der Werbetafel links" ausgegeben werden kann.

Um dies zu ermöglichen, werden in Schritt S3 zunächst die Umgebung des Wegpunkts betreffende Umgebungsdaten ermittelt. Die Ermittlung von Umgebungsdaten ist insbesondere durch die Nutzung von Sensoren und die Nutzung von Datenbanken möglich. Bei der Nutzung von Sensoren können Sensoren der Navigationseinrichtung selbst oder Sensoren einer Einrichtung, die die Navigationseinrichtung umfasst, insbesondere eines Kraftfahrzeugs, genutzt werden, um Umgebungsdaten zu gewinnen. Insbesondere kann bei einem Sichtkontakt zwischen der Ego-Position des Kraftfahrzeugs und dem Wegpunkt die Umgebung des Wegpunktes optisch und/oder durch zusätzliche Sensoren erfasst werden und es kann anschließend eine Mustererkennung, insbesondere eine Bilderkennung durchgeführt werden, um Referenzobjekte in den Sensordaten zu erkennen.

Ergänzend oder alternativ können in Schritt S3 auch Datenbanken mit ortsspezifischen Informationen genutzt werden. So umfassen Navigationsgeräte typischerweise digitale Karten, die bereits einzelne Referenzobjekte mit zugehörigen Positionen wie beispielsweise Tankstellen, Sehenswürdigkeiten, Restaurants und Ähnliches umfassen. Diese Informationen können genutzt werden, um beispielsweise Navigationsinformationen wie "an der Kirche rechts" zu generieren. Es ist auch möglich, dass die Navigationseinrichtung oder weitere Einrichtungen, die mit der Navigationseinrichtung in direkter Verbindung stehen, weitere Datenbanken umfassen. Insbesondere ist es jedoch auch möglich, über eine drahtlose Kommunikationsverbindung auf Datenbanken zuzugreifen. So können insbesondere Internetdatenbanken genutzt werden, um weitere ortsspezifische Informationen zu gewinnen.

Diese Informationen können in Textform gewonnen werden. So können beispielsweise Adressdatenbanken oder Ähnliches genutzt werden. Es ist aber auch möglich, aus diesen Datenbanken Informationen zu entnehmen, die anschließend weiterverarbeitet werden müssen, beispielsweise Luftbilder. Die genutzte Datenbank kann Informationen spezifisch zu Navigationszwecken zur Verfügung stellen, vorteilhaft können jedoch auch andere Datenbanken genutzt werden.

In Schritt S4 wird aus den in Schritt S3 gewonnenen Umgebungsdaten wenigstens ein Referenzobjekt bestimmt, das sich in der Umgebung des Wegpunktes befindet. Es ist möglich, dass in der Umgebung des Wegpunktes eine Vielzahl von Referenzobjekten erkannt werden. Häufig ist es vorteilhaft, bei der Ausgabe der Navigationsinformation nur die Bezeichnung eines einzelnen Objektes auszugeben. Daher können die Referenzobjekte insbesondere auch mit einer Priorität versehen werden, die bezeichnet, wie gut die einzelnen Objekte zu Navigationszwecken geeignet sind.

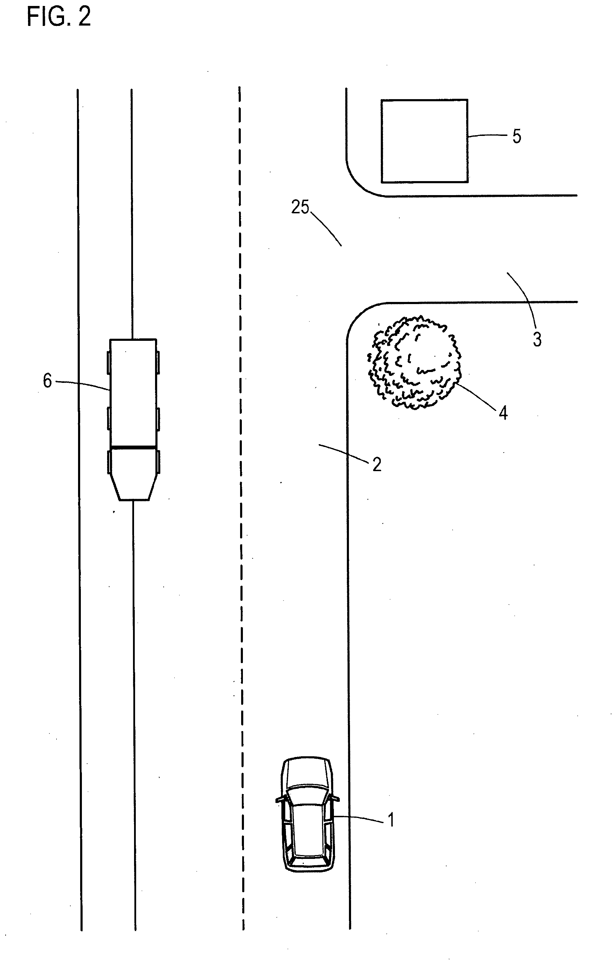

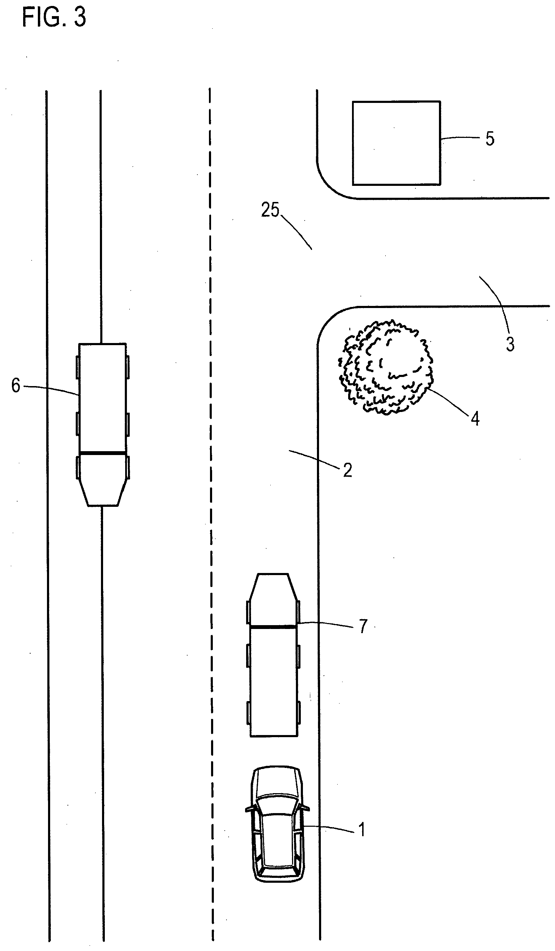

Die Priorität kann beispielsweise davon abhängen, ob ein Objekt zuverlässig unbewegt ist, wie beispielsweise ein Haus, oder wie gut ein Objekt von der Ego-Position des Benutzers zu erkennen ist. Die Auswirkungen einer solchen Prioritätsinformation werden im weiteren Text noch mit Bezug auf ein konkretes Beispiel, das in Fig. 2 und Fig. 3 gezeigt ist, erläutert.

Informationen über das Referenzobjekt können bereits direkt in einer im Verfahren nutzbaren Form vorliegen, beispielsweise als Ergebnis einer Datenbankabfrage, es ist aber auch möglich, dass solche Informationen erst durch eine weitere Bildverarbeitung oder Ähnliches gewonnen werden. Insbesondere bei einer Verwendung des Verfahrens in Kraftfahrzeugen können auch Informationen anderer Kraftfahrzeugsysteme genutzt werden. So können durch Fahrerassistenzsysteme beispielsweise bereits Informationen über weitere Fahrzeuge, insbesondere auch parkende Fahrzeuge, oder andere feste Randobjekte gewonnen worden sein, die im Verfahren als Referenzobjekte genutzt werden können.

Ergebnis des Schritts S4 ist ein einzelnes Referenzobjekt oder eine Liste von Referenzobjekten, die sich an dem Wegpunkt oder in der Nähe des Wegpunktes befinden, wobei vorteilhaft weitere Informationen über das oder die Referenzobjekte ermittelt wurden. In Schritt S5 wird dem Referenzobjekt eine verbale Bezeichnung zugewiesen. Es ist, insbesondere bei der Nutzung von Datenbanken, möglich, dass bereits eine verbale Bezeichnung für das Referenzobjekt vorliegt. Bei der Erkennung von Objekten in Bilddaten oder anderen Sensordaten wird typischerweise auch ein Objekttyp erkannt. Dieser kann, beispielsweise über ein in der Navigationseinrichtung vorgegebenes Wörterbuch, einer verbalen Bezeichnung zugeordnet werden. Auch im Schritt der Zuordnung einer verbalen Bezeichnung können Datenbankabfragen genutzt werden. Beispielsweise können Logos oder Ähnliches erkannt werden, und über eine Datenbankabfrage eine passende Bezeichnung ermittelt werden. Eine verbale Bezeichnung umfasst typischerweise einen Objekttyp. Es kann vorteilhaft sein, den Objekttyp relativ generisch zu halten, d. h. also beispielsweise Kraftfahrzeuge nur generell als Auto, LKW oder Motorrad zu bezeichnen und keine genaueren Typangaben anzuführen, da eine Vielzahl von Benutzern Kraftfahrzeugtypen nicht leicht auseinanderhalten können. Ähnliches gilt für Pflanzen oder Gebäude. Zugleich können aber weitere Informationen die für einen typischen Benutzer sehr leicht zu erkennen sind, wie beispielsweise die Farbe eines Objekts oder Ähnliches als Teil der verbalen Bezeichnung genutzt werden. Auch weitere Adjektive, die Eigenschaften von Referenzobjekten bezeichnen, können genutzt werden. So kann die verbale Bezeichnung Größeninformationen, Farbinformationen oder Ähnliches umfassen.

Es ist möglich, dass die in Schritt S5 ermittelte verbale Bezeichnung zunächst in Textform ermittelt wird. In diesem Fall kann anschließend beispielsweise eine Ausgabe über ein Text-to-Speech-System erfolgen. Es ist aber auch möglich, die verbale Bezeichnung direkt in einer Form zu ermitteln, die eine direkte akustische Wiedergabe ermöglicht. Beispielsweise kann direkt eine PCM kodierte Wellenform erzeugt werden, oder es können Abspiellisten für mehrere Audioobjekte angelegt werden.

In Schritt S6 wird eine Navigationsinformation erstellt, die die zuvor generierte verbale Bezeichnung umfasst. Die Erstellung der Navigationsinformation kann gleichartig erfolgen, wie in bekannten Verfahren, die Straßennamen nutzen, um Wegpunkte zu markieren. Die Navigationsinformation umfasst damit typischerweise neben der verbalen Bezeichnung eine Anweisung an den Benutzer, beispielsweise eine Fahranweisung wie "rechts abbiegen" sowie unter Umständen eine Information, die angibt, in welcher Position sich das Referenzobjekt bezüglich des Wegpunktes befindet. Auch die Navigationsinformation kann in vielfältiger Weise gebildet werden. So kann die Navigationsinformation direkt als Audioinformation berechnet werden, um eine leichte akustische Ausgabe zu ermöglichen, es ist aber auch eine Erstellung der Navigationsinformation in Textform möglich, die anschließend über ein Text-to-Speech-System gewandelt wird oder Ähnliches.

In Schritt S7 erfolgt die akustische Ausgabe der Navigationsinformation. Dies kann über einen Lautsprecher der Navigationseinrichtung selbst erfolgen, es ist aber auch möglich, dass die Navigationseinrichtung andere Lautsprecher nutzt. Insbesondere kann ein Lautsprecher eines Kraftfahrzeugs genutzt werden.

Danach ist das Verfahren mit Schritt S8 abgeschlossen. Das Verfahren kann für beliebig viele Wegpunkte wiederholt werden.

Fig. 2 und Fig. 3 zeigen typische Verkehrssituationen, in denen das Verfahren zum Betrieb der Navigationseinrichtung genutzt werden kann. Die gezeigten Verkehrssituationen sind abgesehen vom Vorhandensein oder Nichtvorhandensein des LKWs 7 identisch. Ein Kraftfahrzeug 1 bewegt sich auf einer Straße 2. Im Kraftfahrzeug 1 ist eine Navigationseinrichtung vorhanden, die zuvor eine Route berechnet hat, die ein Abbiegen des Kraftfahrzeugs 1 von der Straße 2 in eine Straße 3 vorgibt. Damit bildet die Einmündung 25 einen Wegpunkt der Route und bezüglich der Einmündung 25 soll die Navigationsinformation ausgegeben werden, dass das Kraftfahrzeug an der Einmündung 25 rechts abbiegen soll.

Die Navigationseinrichtung versucht daher Referenzobjekte in der Umgebung des Wegpunktes, also der Einmündung 25, zu ermitteln, um eine Ausgabe der Navigationsinformation zu ermöglichen, die eine verbale Bezeichnung des Referenzobjektes umfasst. Durch eine Datenbankabfrage kann das Kraftfahrzeug 1 in der in Fig. 2 gezeigten Verkehrssituation ermitteln, dass an der Einmündung 25 ein Restaurant 5 liegt. Durch eine Fahrzeugkamera des Kraftfahrzeugs 1 werden zudem ein Baum 4 und ein parkender LKW 6 erfasst. Es werden damit drei Referenzobjekte ermittelt.

Zur Erstellung der Navigationsinformation soll jedoch nur die Bezeichnung eines der Referenzobjekte genutzt werden. Daher werden Prioritäten für die Referenzobjekte bestimmt. Durch Analyse der Kameradaten kann die Navigationseinrichtung ermitteln, dass das Restaurant 5 von der Ego-Position des Kraftfahrzeugs aus betrachtet nahezu vollständig von dem Baum 4 verdeckt ist und auch bei weiterer Bewegung des Kraftfahrzeugs 1 auf die Einmündung 25 zu verdeckt bleibt. Daher wird dem Restaurant 5 eine niedrige Priorität zugewiesen. Der Baum 4 und der Lastwagen 6 sind nahezu gleich gut erkennbar. Da jedoch eine Bewegung des Baums 4 weit unwahrscheinlicher ist als eine Bewegung des parkenden LKWs 6, wird für Baum 4 in der in Fig. 2 gezeigten Verkehrssituation eine höhere Priorität bestimmt. Damit wird Baum 4 zum Referenzobjekt bestimmt und als Navigationsinformation kann beispielsweise "hinter dem Baum rechts abbiegen" ausgegeben werden.

Die in Fig. 3 gezeigte Verkehrssituation entspricht der in Fig. 2 gezeigten Verkehrssituation nahezu vollständig, vor Kraftfahrzeug 1 befindet sich jedoch ein weiterer LKW 7. Bei der Bestimmung der Prioritätsinformation wird weiterhin festgestellt, dass das Restaurant 5 aus der Ego-Position des Kraftfahrzeugs 1 schlecht erkennbar ist. Damit wird dem Restaurant 5 weiterhin eine niedrige Priorität zugewiesen. Im Unterschied zu der Verkehrssituation in Fig. 2 kann die Navigationseinrichtung des Kraftfahrzeugs 1 in der Verkehrssituation in Fig. 3 jedoch feststellen, dass Baum 4 teilweise von dem LKW 7 verdeckt ist und damit für den Benutzer der Navigationseinrichtung weit schlechter zu erkennen ist als der LKW 6. Damit wird dem LKW 6 die höchste Priorität zugeordnet und es kann eine Navigationsinformation wie "hinter dem LKW 6 rechts abbiegen" ausgegeben werden. Um eine klar Unterscheidung von LKW 7 zu ermöglichen, kann beispielsweise auch die Navigationsinformation "hinter dem parkenden LKW rechts abbiegen" ausgegeben werden, oder, falls beispielsweise im Rahmen der Bilderkennung ermittelt wurde, dass der LKW 6 grün ist, "hinter dem grünen LKW rechts abbiegen".

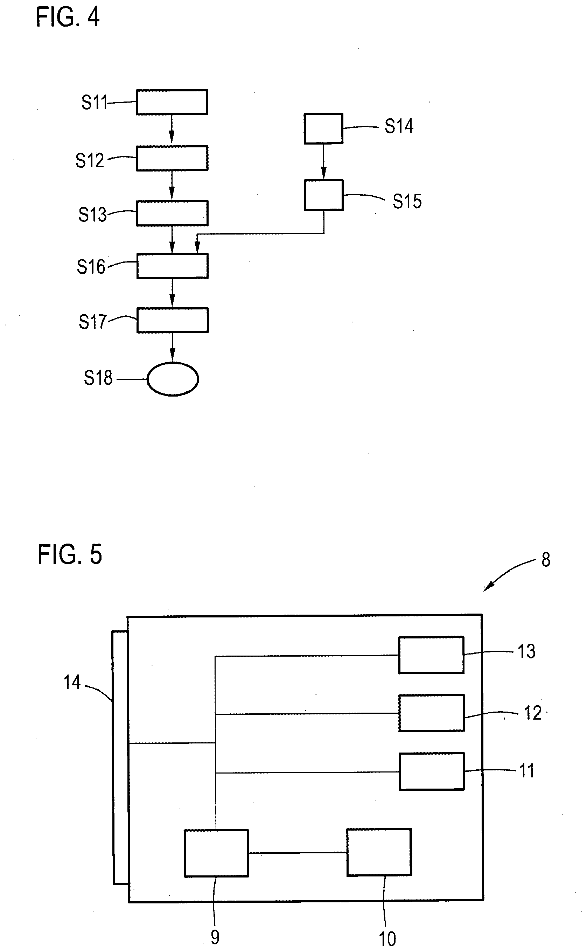

Fig. 4 zeigt ein Ablaufdiagramm zur Erkennung und zur Auswahl von Referenzobjekten. In Schritt S11 werden zunächst Sensorinformationen, hier ein Bild einer Kamera, erfasst. Die in Schritt S11 erfassten Bilddaten werden in Schritt S12 ausgewertet und in den Bilddaten werden ein oder mehrere Objekte erkannt. In Schritt S13 werden aus den in Schritt S12 erkannten Objekte mehrere Objekte ausgewählt, die sich in der Umgebung des Wegpunktes befinden und bei denen davon auszugehen ist, dass sie unbewegt sind.

Ein Unbewegt sein eines Objekts kann beispielsweise dann angenommen werden, wenn ein feststehendes Objekt, wie beispielsweise ein Haus oder Ähnliches, erkannt wird. Es kann aber auch durch die Auswertung von weiteren Sensorinformationen festgestellt werden, dass der Motor eines erfassten Kraftfahrzeugs nicht läuft und damit davon auszugehen ist, dass sich das Kraftfahrzeug nicht bewegt oder Ähnliches. Auch ein Erfassen eines stehenden Objekts über längere Zeit, ohne dass ein erkennbarer Anlass, beispielsweise eine Ampelschaltung oder Ähnliches, für das Stehen des Objektes gegeben ist, kann als Indiz dafür gewertet werden, dass das Objekt ein unbewegtes Objekt ist.

Gleichzeitig mit der optischen Erfassen von Objekten, die als Referenzobjekte ausgewählt werden können, werden in Schritt S14 und Schritt S15 weitere Referenzobjekte durch eine Datenbankabfrage bestimmt. In Schritt S14 wird dazu zunächst die Koordinate des Wegpunkts bestimmt. Häufig ist eine solche Koordinate bereits bei der Routenplanung bestimmt worden und liegt damit vor. In Schritt S15 wird eine Datenbank mit ortsspezifischen Informationen ausgelesen. Dies kann beispielsweise eine Internetdatenbank sein, in der Positionsinformationen für eine Vielzahl von Gebäuden oder Ähnliches vorhanden sind. Aus dieser Datenbank werden Objekte in der Umgebung des Wegpunktes ausgelesen und zu Referenzobjekten bestimmt.

In Schritt S16 wird für die in Schritt S13 und S15 zu Referenzobjekten bestimmten Objekten jeweils eine Priorität festgelegt, mit der bestimmt wird, welches dieser Referenzobjekte zur Erstellung der Navigationsinformation genutzt werden soll. Prioritätsinformationen können insbesondere aus einer tatsächlichen oder voraussichtlichen Sichtbarkeit des Objekts, der Eindeutigkeit des Objekts, der Wahrscheinlichkeit, dass das Objekt ortsfest ist oder Ähnliches, ermittelt werden. Schritt S17 wird das Referenzobjekt mit der höchsten Prioritätsinformation ausgewählt. Mit Schritt S18 ist damit das Referenzobjekt gewählt und das Verfahren kann mit der Zuordnung einer verbalen Bezeichnung zum Referenzobjekt fortgesetzt werden, also beispielsweise mit Schritt S5 aus Fig. 1.

Fig. 5 zeigt schematisch ein Ausführungsbeispiel einer Navigationseinrichtung, die zur Durchführung von einigen der beschriebenen Verfahren ausgebildet ist. Die Navigationseinrichtung 8 umfasst eine Recheneinrichtung 9 mit einem zugeordneten Speicher 10. Die Recheneinrichtung 9 liest zudem die Informationen eines Positionssensors 11, der als GPS-Sensor ausgebildet ist, kann eine Kommunikationseinrichtung 12 ansteuern, die hier eine Drahtlosverbindung zum Internet hergestellt, und kann Audioinformationen über den Lautsprecher 13 ausgeben. Über die Recheneinrichtung 9 wird zudem eine Bedieneinrichtung 14 angesteuert und ausgelesen, die sowohl eine Bilddarstellung ermöglicht, also auch Benutzereingaben. Abhängig von den Benutzereingaben an der Bedienschnittstelle 14 kann in der Recheneinrichtung 9 durch Nutzung einer in dem zugeordneten Speicher 10 abgelegten digitalen Karte eine Route geplant werden. Für einen vorausliegenden Wegpunkt dieser Route kann mit Hilfe der digitalen Karte und zusätzlicher Datenbankabfragen über die Kommunikationseinrichtung 12 ein Referenzobjekt bestimmt werden. Anschließend kann die Recheneinrichtung eine digitale Darstellung einer Wellenform berechnen, die die Navigationsinformation darstellt, wobei die Navigationsinformation eine verbale Bezeichnung für das bestimmte Referenzobjekt umfasst. Über einen nicht gezeigten Digital-Analog-Wandler kann diese Wellenform dann an den Lautsprecher 13 ausgegeben werden.

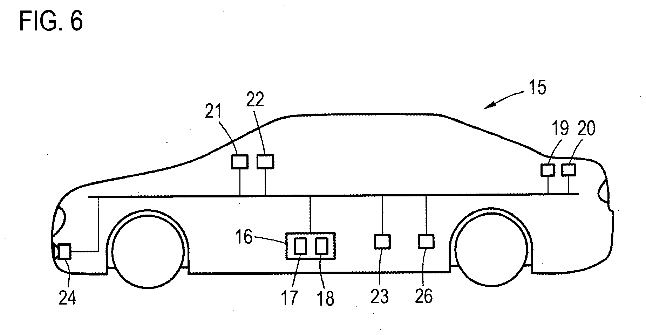

Fig. 6 zeigt ein Ausführungsbeispiel eines Kraftfahrzeugs, das eine Navigationseinrichtung 16 umfasst, die die beschriebenen Verfahren durchführen kann. Die Navigationseinrichtung 16 umfasst eine Recheneinrichtung 17, sowie einen zugeordneten Speicher 18, der eine digitale Karte umfasst. Für die weiteren Funktionen der Navigationseinrichtung 16 werden Komponenten des Kraftfahrzeugs mitgenutzt. So erfolgt eine Kommunikation über eine Kommunikationseinrichtung des Kraftfahrzeugs 20, die Positionsbestimmung erfolgt über eine Positionsbestimmungseinrichtung 19 des Kraftfahrzeug und eine Benutzerführung über ein Benutzerinterface 22, das sowohl eine grafische Darstellungsmöglichkeit als auch Eingabemittel umfasst. Beispielsweise kann als Bedienelement 22 eine Kombination aus einem Display und einem Drehdrücksteller genutzt werden. Navigationsinformationen können über den Lautsprecher 21 ausgegeben werden, der Teil der Audioanlage des Kraftfahrzeugs ist.

Die einzelnen Komponenten des Kraftfahrzeugs 15 kommunizieren über einen CAN-Bus. Neben den genannten Komponenten kann die Navigationseinrichtung 16 noch auf Bildinformationen einer Kamera 24 auf der Frontseite des Kraftfahrzeugs, einen zusätzlichen Datenspeicher 23, sowie auf Objektinformationen aus einem Fahrerassistenzsystem 26 zurückgreifen. Gegenüber dem in Fig. 5 gezeigten Navigationssystem ist es damit dem Navigationssystem 16 im Kraftfahrzeug 15 zusätzlich möglich, Referenzobjekte zu bestimmen, indem Bilder der Kamera 24 ausgewertet werden. Zudem können zusätzlich im Datenspeicher 23 vorhandene Datenbanken genutzt werden. Auch das Fahrerassistenzsystem 26 kann Zusatzinformationen beispielsweise über weitere Kraftfahrzeug zur Verfügung stellen. Insbesondere ist es bekannt, dass Fahrerassistenzsysteme auch parkende Kraftfahrzeuge erfassen und identifizieren.

Vorteilhaft im Kraftfahrzeug 15 ist zudem, dass durch die Kamera 24 Informationen über das Sichtfeld aus der Ego-Position des Kraftfahrzeugs ermittelt werden können. Wie bereits mit Bezug auf Fig. 2 und Fig. 3 erläutert, können solche Informationen insbesondere zur Auswahl eines einzelnen Referenzobjektes aus einer Vielzahl von Referenzobjekten genutzt werden.

## Patentansprüche

1. Verfahren zum Betrieb einer Navigationseinrichtung, insbesondere in einem Kraftfahrzeug,
umfassend die Schritte:
- Bestimmung eines voraus liegenden Wegpunktes einer durch die Navigationseinrichtung geplanten Route, bezüglich dem eine Navigationsinformation an einen Benutzer ausgegeben werden soll,
- Ermitteln von die Umgebung des Wegpunktes betreffenden Umgebungsdaten zumindest teilweise anhand von Bilddaten einer am Kraftfahrzeug angeordneten, die Umgebung erfassenden Kamera durch die Navigationseinrichtung,
- Ermittlung wenigstens eines in der Umgebung des Wegpunktes befindlichen Referenzobjekts durch Bilderkennung in den Bilddaten aus den Umgebungsdaten,
- Zuordnung einer verbalen Bezeichnung zu dem Referenzobjekt,
- Erstellung der die Bezeichnung umfassenden Navigationsinformation, und
- akustische Ausgabe der Navigationsinformation;
**dadurch gekennzeichnet, dass**
als Referenzobjekt ein parkendes Fahrzeug ermittelt wird, das sich nicht bewegt, wobei ermittelt wird, ob eine Bewegung des parkenden Fahrzeugs erwartet werden kann, indem über Sensoren ermittelt wird, ob der Motor des parkenden Fahrzeugs läuft und/oder ob sich das parkende Fahrzeug in einer Parkbucht oder auf einer Straße befindet und/oder ob für eine vorgesehene Mindestzeit eine Nichtbewegung des parkenden Fahrzeugs beobachtet wird.

2. Verfahren nach Anspruch 1,
**dadurch gekennzeichnet, dass** die Navigationseinrichtung die Umgebungsdaten zumindest teilweise durch Bestimmung einer Position des Wegpunktes und Auswertung wenigstens einer Datenbank mit ortsspezifischen Informationen bestimmt.

3. Verfahren nach Anspruch 2,
**dadurch gekennzeichnet,**
**dass** die Datenbank extern ist und der Zugriff auf die externe Datenbank durch drahtlose Kommunikation erfolgt.

4. Verfahren nach einem der vorangehenden Ansprüche,
**dadurch gekennzeichnet,**
**dass** bei Ermittlung mehrerer Referenzobjekte eine Prioritätsinformation für die Referenzobjekte ermittelt wird und in Abhängigkeit von der Prioritätsinformation ein Referenzobjekt gewählt wird, dessen Bezeichnung ausgegeben wird.

5. Navigationseinrichtung zur Führung eines Benutzers entlang einer durch die Navigationseinrichtung bestimmten Route,
**dadurch gekennzeichnet,**
**dass** sie zur Durchführung eines Verfahrens nach einem der vorangehenden Ansprüche ausgebildet ist.

6. Kraftfahrzeug,
**dadurch gekennzeichnet,**
**dass** es eine Navigationseinrichtung nach Anspruch 5 umfasst.

## Claims

1. Method for operating a navigation device, in particular in a motor vehicle, comprising the steps:
- determining a waypoint, located in front, of a route planned by the navigation device, in relation to which navigation information should be output to a user,
- identifying by means of the navigation device environmental data concerning the environment of the waypoint at least partially using image data of a camera arranged on the motor vehicle and recording the environment,
- identifying at least one reference object located in the environment of the waypoint by image recognition in the image data from the environmental data,
- assigning a verbal designation to the reference object,
- generating the navigation information comprising the designation, and
- acoustically emitting the navigation information;
**characterised in that** a parked vehicle, which is not moving, is identified as the reference object, wherein it is identified whether a movement of the parked vehicle can be anticipated by identifying by means of sensors whether the engine of the parked vehicle is running and/or whether the parked vehicle is located in a parking bay or on a street and/or whether a non-movement of the parked vehicle is observed for an allocated minimum period.

2. Method according to Claim 1,
**characterised in that**
the navigation device determines the environmental data at least partially by determining a position of the waypoint and evaluating at least one database with location-specific information.

3. Method according to Claim 2,
**characterised in that**
the database is external and the access to the database takes place by wireless communication.

4. Method according to any one of the preceding claims,
**characterised in that**
priority information is identified for the reference objects when identifying a plurality of reference objects and one reference object is selected as a function of the priority information, whose designation is output.

5. Navigation device to guide a user along a route determined by the navigation device,
**characterised in that**
it is designed to carry out a method according to any one of the preceding claims.

6. Motor vehicle,
**characterised in that**,
it comprises a navigation device according to Claim 5.

## Revendications

1. Procédé de fonctionnement d'un système de navigation, en particulier dans un véhicule automobile,
comprenant les étapes de :
- détermination d'un point de cheminement à venir d'un itinéraire planifié par le système de navigation, par rapport auquel une information de navigation doit être émise à un utilisateur
- détermination de données environnementales concernant l'environnement du point de cheminement au moins en partie à l'aide de données d'image d'une caméra détectant l'environnement, agencée au niveau du véhicule automobile par le système de navigation,
- détermination d'au moins un objet de référence se trouvant dans l'environnement du point de cheminement par reconnaissance d'image dans les données d'image à partir des données environnementales,
- affectation d'une désignation verbale à l'objet de référence,
- création de l'information de navigation comprenant la désignation, et
- émission acoustique de l'information de navigation ;
**caractérisé en ce qu'**un véhicule garé, qui ne se déplace pas, est déterminé en tant qu'objet de référence, dans lequel il est déterminé si un mouvement du véhicule garé peut être attendu, en déterminant par le biais de capteurs si le moteur du véhicule garé tourne et/ou si le véhicule garé se trouve dans une aire de stationnement ou sur une route et/ou si un non-mouvement du véhicule garé est observé pour un temps minimum prévu.

2. Procédé selon la revendication 1,
**caractérisé en ce**
**que** le système de navigation détermine les données environnementales au moins en partie par détermination d'une position du point de cheminement et évaluation d'au moins une base de données avec des informations locales.

3. Procédé selon la revendication 2,
**caractérisé en ce**
**que** la base de données est externe et l'accès à la base de données externe se fait par communication sans fil.

4. Procédé selon l'une quelconque des revendications précédentes,
**caractérisé en ce**
**que** lors de la détermination de plusieurs objets de référence, une information de priorité est déterminée pour les objets de référence et en fonction de l'information de priorité, un objet de référence est sélectionné dont la désignation est émise.

5. Système de navigation pour le guidage d'un utilisateur le long d'un itinéraire déterminé par le système de navigation,
**caractérisé en ce**
**qu'**il est réalisé pour la réalisation d'un procédé selon l'une quelconque des revendications précédentes.

6. Véhicule,
**caractérisé en ce**
**qu'**il comprend un système de navigation selon la revendication 5.
